# EUROPEAN PATENT SPECIFICATION

(11) **EP 3 972 004 B1**
(45) Date of publication and mention of the grant of the patent: **04.06.2025**
(21) Application number: 20837143.5
(22) Date of filing: 03.07.2020
(51) Int. Cl.: H01M 50/152, H01M 10/04

(54) **TRAY FOR LOADING BATTERY CAP**
LADESCHALE FÜR BATTERIEKAPPEN
PLATEAU DE CHARGEMENT DE CAPUCHONS DE BATTERIE

(30) Priority: 08.07.2019 KR 20190082166
(43) Date of publication of application: 23.03.2022
(73) Proprietor: LG Energy Solution, Ltd., Seoul 07335 (KR)
(72) Inventor: LEE, Gil Young, Daejeon 34122 (KR); LEE, Seung Tae, Daejeon 34122 (KR); KIM, Geon Woo, Daejeon 34122 (KR)
(74) Representative: Plasseraud IP
(86) International application number: PCT/KR2020/008765
(87) International publication number: WO 2021/006572

(56) References cited:
- CN-A- 108 011 062
- CN-U- 207 239 610
- JP-A- 2003 104 476
- JP-U- 3 211 367
- KR-A- 20070 051 296
- KR-A- 20100 123 828

## Description

### CROSS-REFERENCE TO RELATED APPLICATION

The present application claims the benefit of the priority of Korean Patent Application No. 10-2019-0082166, filed on July 08, 2019.

### TECHNICAL FIELD

The present invention relates to a tray for loading a battery cap, which stores and transfers a battery cap coupled to an upper end of a can of a cylindrical battery, and more particularly, to a tray for loading a battery cap, in which more battery caps are capable of being loaded, and the battery caps are capable of being stacked in more stages.

### BACKGROUND ART

Unlike primary batteries, rechargeable secondary batteries are being developed not only for digital devices but also for vehicles such as electric vehicles.

Secondary batteries are variously classified according to materials and external shapes of a positive electrode and a negative electrode. Among them, since such a lithium secondary battery using a lithium compound material has large capacity and a low self-discharge rate, the lithium secondary battery is being widely used instead of a nickelcadmium secondary battery according to the related art.

Also, the lithium secondary battery may be manufactured in various shapes. Representatively, the lithium secondary battery may be manufactured in a cylinder type, a prismatic type, or a pouch type.

Among them, in the case of the cylindrical type, when a cylindrical electrode assembly having a circular tube shape with an opened upper side and a closed bottom side is mounted, a disk-shaped battery cap is coupled to an upper end of a can.

In general, the battery cap has a structure in which a safety vent that is broken to discharge a gas at a predetermined pressure so as to prevent explosion when a gas pressure inside a can increases, a PTC element that interrupts current at a high temperature, a current interrupt device (CID) that interrupts current when an internal pressure increases, and a top cap connected to a positive electrode tab of an electrode assembly to serve as a positive electrode terminal and disposed at the uppermost end are mounted.

As described above, since the battery cap is coupled to an upper end of the can in a state in which several components are mounted, the battery cap is manufactured in a process that is separated from processes for manufacturing the can and is transported as a combination device of the can and the battery cap in a state of being seated on the tray.

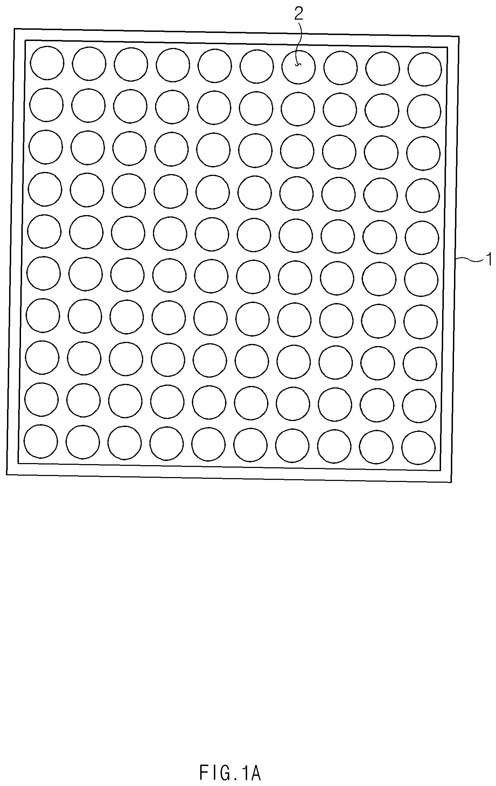

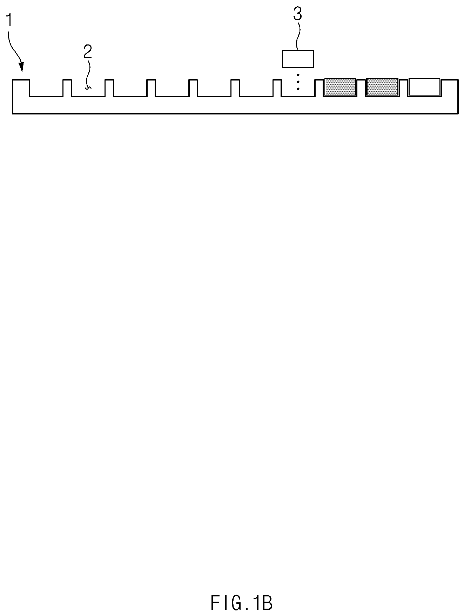

As illustrated in FIGS. 1a and 1b, which illustrate the tray for transport and storage according to the related art, the tray 1 according to the related art has a rectangular plate shape and has a structure in which a plurality of grooves 2 are defined along horizontal and vertical rows so that a battery cap 3 is laid horizontally and seated on a top surface of the tray 1.

However, the structure of the tray 1 according to the related art has been difficult to supply a sufficient quantity of battery caps 3 at once as a production rate in a production line increases. That is, when a predetermined quantity of battery caps 3 has to be provided in the production line, the number of battery caps 3 mounted on each tray decreases, and thus, more trays 1 are required. As a result, a large space and much time are required for transporting and storing the trays 1.

Further prior art is described in KR 2010 0123828 A.

### DISCLOSURE OF THE INVENTION

### TECHNICAL PROBLEM

Accordingly, a main object of the present invention is to provide a tray for loading battery caps, which is capable of mounting more battery caps per unit volume when compared to the structure according to the related art.

### TECHNICAL SOLUTION

The invention is defined in the appended set of claims.

A tray for loading battery caps, on which the battery caps are mountable, according to the present invention for achieving the above object comprises: first trays, each having a top surface, in which first grooves are defined, and a bottom surface, in which second grooves are defined; and second trays, each having a top surface, in which third grooves are defined, and a bottom surface, in which fourth grooves are defined and disposed above or below the first tray, wherein, when the first tray is disposed above the second tray, each of the second grooves and each of the third grooves communicate with each other to provide a communication space, and when the first tray is disposed below the second tray, each of the first grooves and each of the fourth grooves communicate with each other to provide a communication space, wherein the battery caps are mountable in a vertically erect state in the first tray and the second tray.

Here, as described above, the battery cap may mean a disk-shaped battery cap coupled to an upper end of a can of the cylindrical secondary battery. Alternatively, the battery cap may be replaced with a button-type secondary battery or different disk-shaped components of the secondary battery, such as a top cap placed at the uppermost end of the battery cap. Also, it is not necessarily limited to the circular shape, and the battery cap may be a plate-shaped component that is mounted vertically with an area greater than a thickness thereof.

The first grooves and the second grooves are alternately arranged so that the second grooves are disposed between the first grooves adjacent to each other in the first tray, and the third grooves and the fourth grooves may be alternately arranged so that the fourth grooves are disposed between the third grooves adjacent to each other in the second tray.

When the first tray and the second tray are stacked, and the battery caps are mounted in the space between the second groove and the third groove or the space between the first groove and the fourth groove, upper ends of the battery caps are restrictable in the second grooves or the fourth grooves, and lower ends of the battery caps are restricteable in the first grooves or the third grooves to prevent the first tray and the second tray from being separated.

The first tray may have a rectangular plate shape in which the first grooves and the second grooves are alternately arranged along a vertical line, wherein the first trays having the same shape may be continuously arranged along a horizontal line, and the second tray may have a rectangular plate shape in which the third grooves and the fourth grooves are arranged along the vertical line, wherein the second trays having the same shape may be continuously arranged along the horizontal line.

The first tray may have a zigzag-shaped cross-section vertically along the vertical line in a region in which the first grooves and the second grooves are alternately arranged, and the second tray may have a zigzag-shaped cross-section vertically along the vertical line in a region in which the third grooves and the fourth grooves are alternately arranged.

The first tray and the second tray may have the same area, and the first trays and the second trays may be alternately and continuously stacked.

When the battery caps are seated in the erect state, each of the first grooves and the second grooves may have a width in which the battery caps are maintainable in the erect state.

In the first tray, the number of first grooves arranged in the vertical line and the number of first grooves arranged in the horizontal line may be the same, and in the second tray, the number of third grooves arranged in the vertical line and the number of third grooves arranged in the horizontal line may be the same.

When the first tray is placed above the second tray so that the battery caps are placeable in the vertically erect state in the space defined between the second groove and the third groove; and the first tray is placed below the second tray so that the battery caps are placeable in the vertically erect state in the space defined between the first groove and the fourth groove, the uppermost ends of the battery caps may not contact the first tray or the second tray.

Also, each of the first tray and the second tray may be made of a material having hardness less than that of the battery cap.

Furthermore, the first tray may have one of a protrusion or a groove at a portion having a shape protruding upward by the second groove between the first grooves adjacent to each other, and the other of the protrusion or the groove at a portion having a shape protruding downward by the first groove between the second grooves adjacent to each other, and the second tray may have one of a protrusion or a groove, which is engaged with the protrusion or the groove disposed at a lower portion of the first tray, at a portion having a shape protruding upward by the fourth groove between the third grooves, and the other of the protrusion or the groove at a portion having a shape protruding downward by the third groove between the fourth grooves adjacent to each other.

Also, according to another embodiment, a magnet may be attached to a portion at which the first tray and the second tray contact each other to guide the first tray and the second tray to be disposed in position by magnetism when the first tray and the second tray are stacked.

### ADVANTAGEOUS EFFECTS

In the present invention having the above technical characteristics, since the battery cap is mounted vertically in the first tray and the second tray, more battery caps per unit area may be loaded.

Since the first grooves and the second grooves are alternately arranged so that the second groove is disposed between the first grooves adjacent to each other in the first tray, and the third grooves and the fourth grooves are alternately arranged so that the fourth groove is disposed between the third grooves adjacent to each other, the battery cap stacked below may be disposed between the battery caps stacked above to reduce the stacked height. That is, in the present invention, one of the first trays and one of the second trays may be stacked in two layers, and the height of the battery caps mounted on the stacked trays may be lower than twice the diameter of the battery cap. Therefore, the number of stacked trays may be further increased.

Also, when the first tray and the second tray are stacked, and the battery cap is mounted in the space between the second groove and the third groove or the space between the first groove and the fourth groove, the upper end of the battery cap may be restricted in the second groove or the fourth groove, and the lower end of the battery cap may be restricted in the first groove or the third groove to prevent the first tray and the second tray from being separated. That is, it is possible to more robustly prevent the trays from falling down by an impact applied from a lateral direction.

Since each of the first groove and the third groove of the first tray and the second tray has a width in which the battery cap is maintained in the erect state when the battery caps are seated in the erect state, the dispensing equipment may more easily dispense one or multiple battery caps when compared to the state in which the dispensing equipment is laid in the production process.

Since each of the first tray and the second tray is made of the material having hardness less than that of the battery case, when the trays and the battery cap collide with each other, it may be prevented that the battery caps are scratched or damaged.

Furthermore, the seated positions of the first tray and the second tray may be guided by the protrusion and the groove or by the magnet and thus be prevented from being shaken after being seated.

### BRIEF DESCRIPTION OF THE DRAWINGS

FIG. 1a is a plan view of a tray according to a related art.
FIG. 1b is a cross-sectional view illustrating a state of a side surface on which a battery cap is seated on the tray according to the related art in a laid (horizontal) state.
FIG. 2 is a perspective view illustrating a state in which a first tray is stacked on a second tray in a state in which battery caps are mounted on the first tray and the second tray according to a first embodiment of the present invention.
FIG. 3 is a cross-sectional view taken along line A-A in FIG. 2.
FIG. 4 is an enlarged view of a portion C in FIG. 3.
FIG. 5 is a see-through view illustrating a portion B in FIG. 2.
FIG. 6 is a cross-sectional view illustrating shapes of a first tray and a second tray according to a second embodiment of the present invention.
FIG. 7 is a cross-sectional view illustrating shapes of a first tray and a second tray according to a third embodiment of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly illustrate the present invention, parts that are not related to the description are omitted, and the same or similar components are denoted by the same reference numerals throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a tray for loading a battery cap, on which a disk-shaped battery cap 30 is mounted, i.e., a tray for loading a battery cap 30, in which the battery cap 30 is mounted in a vertically erect state so that more battery caps 30 per unit volume are capable of being mounted when compared to the structure of the battery cap according to the related art, and thus, the battery caps 30 are more easily stored, transported, and dispensed. Hereinafter, embodiments according to the present invention will be described with reference to the accompanying drawings.

### First Embodiment

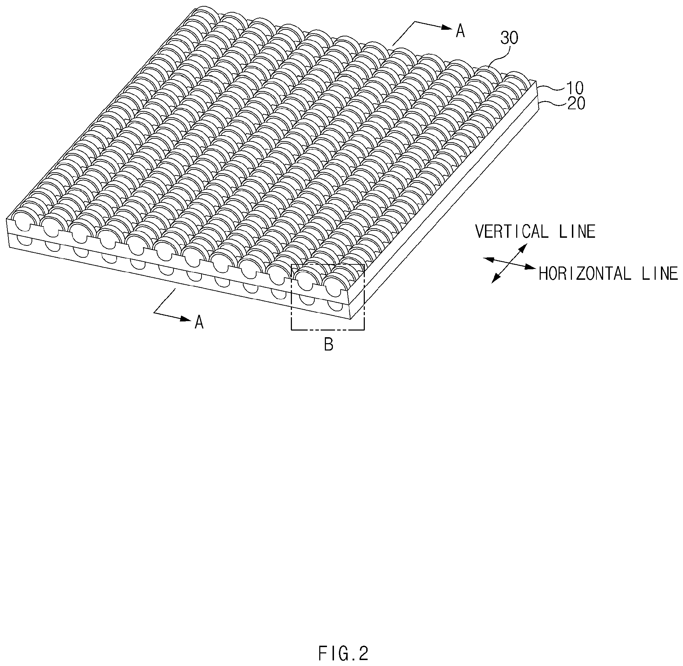

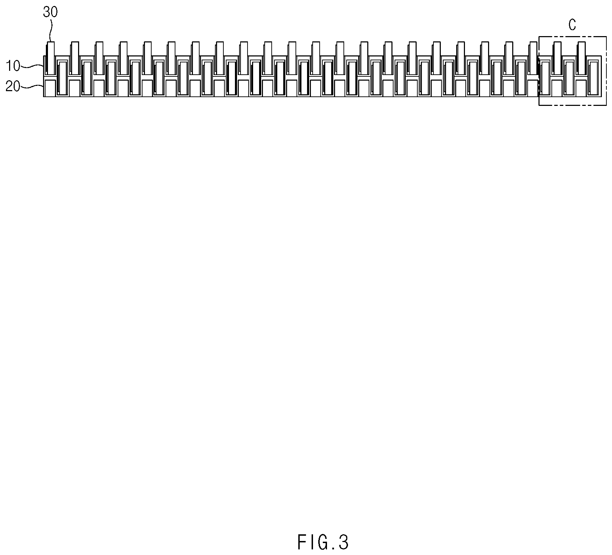

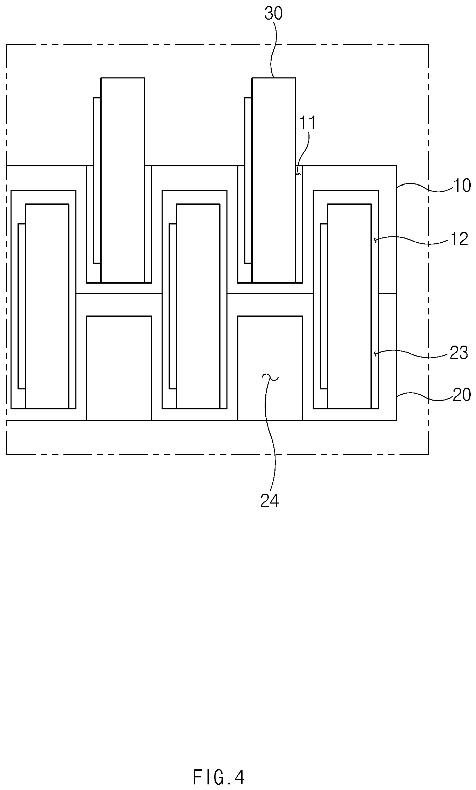

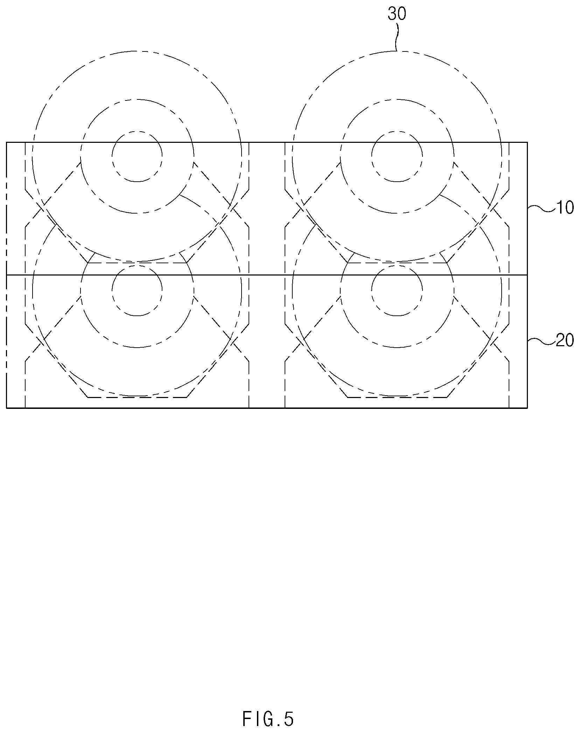

FIGS. 2 to 5 illustrate a configuration of a first tray and a second tray according to a first embodiment of the present invention. FIG. 2 is a perspective view illustrating a state in which the first tray is stacked on the second tray in a state in which a battery cap is mounted on the first tray and the second tray according to a first embodiment of the present invention, FIG. 3 is a cross-sectional view taken along line A-A in FIG. 2, FIG. 4 is an enlarged view of a portion C in FIG. 3, and FIG. 5 is a see-through view illustrating a portion B in FIG. 2.

Referring to the accompanying drawings, the tray according to the first embodiment of the present invention comprises a first tray 10 and a second tray 20. The first tray 10 and the second tray 20 are alternately and continuously stacked.

The first tray 10 has a structure in which a first groove 11 is defined in a top surface thereof, and a second groove 12 is defined in a bottom surface thereof, and the second tray 20 has a structure in which a third groove 23 is defined in a top surface thereof, and a fourth groove 24 is defined in a bottom surface thereof.

Also, the second tray 20 may be stacked above and below the first tray 10. When the first tray 10 is disposed above the second tray 20, the second groove 12 and the third groove 23 communicate with each other to provide a communication space, and when the first tray 10 is disposed below the second tray 20, the first groove 11 and the fourth groove 24 communicate with each other to provide a communication space.

Furthermore, the battery cap 30 is mounted in a vertically erect state in the first tray 10 and the second tray 20. That is, the battery cap 30 is mounted in the vertically erect state within the first groove 11 and the third groove 23, i.e., in the communication space between the second groove 12 and the third groove 23 and the communication space between the first groove 11 and the fourth groove 24.

As described above, the battery cap 30 means a disk-shaped battery cap coupled to an upper end of a can of a cylindrical secondary battery. Alternatively, the battery cap 30 may be replaced with a button-type secondary battery or different disk-shaped components of the secondary battery, such as a top cap placed at the uppermost end of the battery cap 30.

As illustrated in the state in which the battery cap 30 is seated in FIG. 2, the first tray having the same shape are continuously arranged along a horizontal line, ad as illustrated in FIGS. 3 and 4, the first tray 10 has a rectangular plate shape in which the first grooves 11 and the second grooves 12 are alternately arranged along a vertical line.

Likewise, the second tray 20 has a rectangular plate shape in which the third grooves 23 and the fourth grooves 24 are arranged along the vertical line, and the second trays 20 having the same shape are continuously arranged along the horizontal line. However, as described above, the second tray 20 is different from the first tray 10 in the positions of the grooves 11 and 12 so that the third groove 23 and the fourth groove 24 of the second tray 20 respectively communicate with the second groove 12 and the first groove 11.

Also, since the first tray 10 and the second tray 20 have the rectangular plate shapes having the same area, respectively, the first trays 10 and the second trays 20 may be alternately and continuously stacked. Also, in the first tray 10, the number of first grooves 11 provided in the vertical line and the number of first grooves 11 provided in the horizontal line may be the same, and in the second tray 20, the number of third grooves 23 provided in the vertical line and the number of third grooves 23 provided in the horizontal line may be the same (however, the arrangement and number of grooves may be different according to a shape and size of the tray).

That is, the first grooves 11 and the second grooves 12 may be alternately arranged so that the second groove 12 is disposed between the first grooves 11 adjacent to each other in the first tray 10, and the third grooves 23 and the fourth grooves 24 may be alternately arranged so that the fourth groove 24 is disposed between the third grooves 23 adjacent to each other in the second tray 20. Also, the second groove 12 and the third groove 23 may communicate with each other, and the first groove 11 and the fourth groove 24 may communicate with each other according to the stacked positions of the first tray 10 and the second tray 20.

Furthermore, as illustrated more clearly in FIG. 4, when the first tray 10 and the second tray 20 are stacked, and the battery cap 30 is mounted in the space between the second groove 12 and the third groove 23 or the space between the first groove 11 and the fourth groove 24, an upper end of the battery cap 30 may be restricted in the second groove 12 or the fourth groove 24, and a lower end of the battery cap 30 may be restricted in the first groove 11 or the third groove 23 to prevent the first tray and the second tray from being separated.

That is, the first tray 10 has a zigzag-shaped cross-section vertically along the vertical line in the region in which the first grooves 11 and the second grooves 12 are alternately arranged, and the second tray 20 has a zigzag-shaped cross-section vertically along the vertical line in the region in which the third grooves 23 and the fourth grooves 24 are alternately arranged. Here, the battery cap 30 may be mounted in the space between the grooves, and thus, the space may have a size greater than that of the battery cap 30. Also, each of the first groove 11 and the third groove 23 has a width in which the battery cap 30 is maintained in the erect state when the battery cap 30 is seated in the erect state.

Thus, when the first tray 10 is placed above the second tray 20 so that the battery cap 30 is placed in the vertically erect state in the space defined between the second groove 12 and the third groove 23; and the first tray 10 is placed below the second tray 20 so that the battery cap 30 is placed in the vertically erect state in the space defined between the first groove 11 and the fourth groove 24, the uppermost end of the battery cap 30 does not contact the first tray 10 or the second tray 20.

It is preferable that each of the first tray 10 and the second tray 20 are made of a material having hardness less than that of the battery cap 30.

That is, since even a small impact occurs between the first and second trays 10 and 20 and the battery cap 30 while the battery cap 30 is mounted or dispensed and transported, it is preferable that the each of the first tray 10 and the second tray 20 is made of a relatively soft material when compared to the battery cap 30 so as to suppress or minimize an occurrence of scratch or deformation of the battery cap 30.

In the tray having the configuration as described above according to the present invention, since the battery cap 30 is mounted in the vertically erect state in the first tray 10 and the second tray 20, more battery caps 30 per unit area may be loaded when compared to the tray mounted to be laid horizontally according to the related art.

Since The first groove 11 and the second groove 12 are alternately arranged so that the second groove 12 is disposed between the adjacent first grooves 11 in the first tray 10, and the third groove 23 and the fourth groove 24 are alternately disposed so that the fourth groove 24 is disposed between the adjacent third grooves 23 in the second tray 20, the battery caps 30 stacked below may be placed between the battery caps 30 stacked above to reduce a stacked height. That is, as illustrated in FIG. 5, when the first tray 10 is stacked above the second tray 20, the total height may be less than twice a diameter of the battery cap 30. Therefore, the number of stacked trays may further increase.

Since each of the first tray 10 and the second tray 20 is made of the material having the hardness less than that of the battery cap 30, the occurrence of the stretch or damage of the battery cap 30 may be prevented when the trays 10 and 20 collide with the battery cap 30.

### Second Embodiment

In a second embodiment of the present invention, a structure, which is capable of fixing a first tray 10 and a second tray 20 to prevent the first tray 10 and the second tray 20 from being shaken in a state in which a battery cap 30 is mounted between the first tray 10 and the second tray 20, is provided.

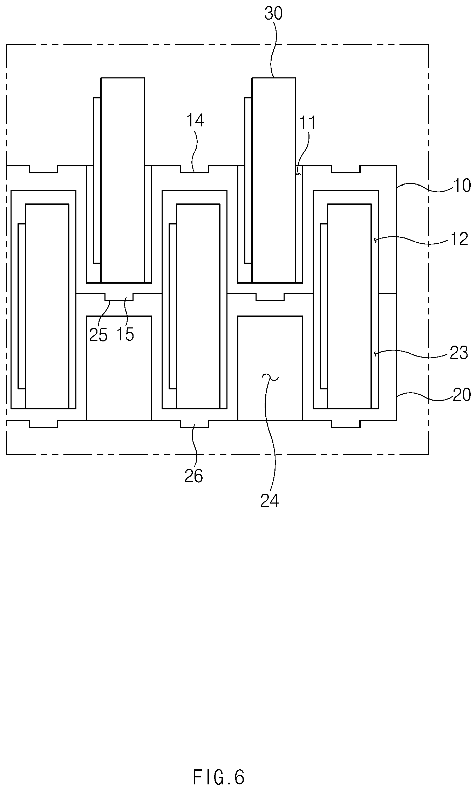

Referring to FIG. 6 that illustrates a cross-sectional view of the first tray and the second tray according to the second embodiment of the present invention, in this embodiment, the first tray 10 has a groove 14 in a portion having a shape protruding upward by a second groove 12 between first grooves 11 adjacent to each other. Also, a protrusion 15 is disposed to protrude downward at a portion having a shape protruding downward by the first groove 11 between the second grooves 12 adjacent to each other.

Similarly, the second tray 20 has a groove 25, which is engaged with the protrusion 15 disposed at a lower portion of the first tray 10, in a portion having a shape protruding upward by a fourth groove 24 between third grooves 23, and a protrusion 26 is disposed at a portion having a shape protruding downward by the third groove 23 between the fourth grooves 24 adjacent to each other.

Thus, when the second tray 20 or the first tray 10 are sequentially stacked above the first tray 10 or the second tray 20, which is disposed below, the protrusions 15 and 26 may be fitted into the grooves 14 and 25 and thus be prevented from being separated from the grooves 14 and 25 by a weight of each of the tray and the battery cap 30, which are disposed above the first and second trays 10 and 20, thereby stably stacking the trays in more stages.

### Third Embodiment

Furthermore, in a third embodiment of the present invention, a structure that is capable of preventing a first tray 10 and a second tray 20 from being shaken and capable of guiding the first tray 10 and the second tray 20 to be disposed in position when seated.

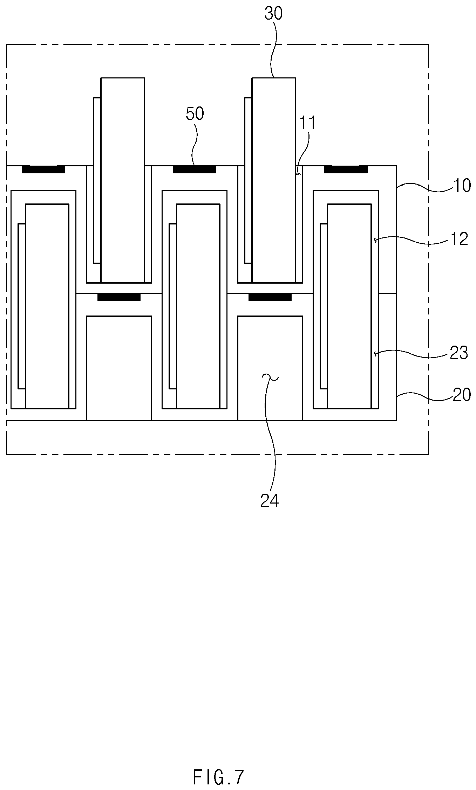

As illustrated in FIG. 7 that illustrates a cross-sectional view of a first tray 10 and a second tray 20 according to the third embodiment, in this embodiment, a magnet 50 may be attached to one of portions contacting each other when the first tray 10 and the second tray 20 are seated in position, and a metal may be placed on the other portion to be in contact with the magnet 50 so as to be magnetized to generate attraction force or may be coated with a predetermined thickness.

Alternatively, magnets 50 may be respectively disposed at each of portions at which the first tray 10 and the second tray contact each other to generate the attraction force at the positions contacting each other so that the portions having opposite polarities face each other, thereby guiding the first tray 10 and the second tray 20 to be disposed in position.

Therefore, when the first tray 10 and the second tray 20 are stacked, the positions of the first and second trays 10 and 20, which are to be seated, may be guided by magnetism. As a result, after the first and second trays 10 and 20 are seated, the first and second trays 10 and 20 may be prevented from being shaken.

Although the coupling structure of the grooves 14 and 25 and the protrusions 15 and 26 according to the second embodiment and the structure in which the magnet 50 according to the third embodiment is disposed are separately described as described above, only one of the above two structures may be applied, or both the structures may be applied at the same time.

## Claims

1. A tray for loading battery caps (30), on which the battery caps (30) are mountable, the tray comprising:
first trays (10), each having a top surface, in which first grooves (11) are defined, and a bottom surface, in which second grooves (12) are defined; and
second trays (20), each having a top surface, in which third grooves (23) are defined, and a bottom surface, in which fourth grooves (24) are defined and disposed above or below the first tray (10), wherein, when the first tray (10) is disposed above the second tray (20), each of the second grooves (12) and each of the third grooves (23) communicate with each other to provide a communication space, and when the first tray (10) is disposed below the second tray (20), each of the first grooves (11) and each of the fourth grooves (24) communicate with each other to provide a communication space,
**characterized in that** the battery caps (30) are mountable in a vertically erect state in the first tray (10) and the second tray (20),
wherein the first grooves (11) and the second grooves (12) are alternately arranged so that the second grooves (12) are disposed between the first grooves (11) adjacent to each other in the first tray (10), and
the third grooves (23) and the fourth grooves (24) are alternately arranged so that the fourth grooves (24) are disposed between the third grooves (23) adjacent to each other in the second tray (20), and
wherein, when the first tray (10) and the second tray (20) are stacked, and the battery caps (30) are mounted in the space between the second groove (12) and the third groove (23) or the space between the first groove (11) and the fourth groove (24), upper ends of the battery caps (30)are restrictable in the second grooves (12) or the fourth grooves (24), and lower ends of the battery caps (30) are restrictable in the first grooves (11) or the third grooves (23) to prevent the first tray (10) and the second tray (20) from being separated.

2. The tray according to claim 1, wherein the first tray (10) has a rectangular plate shape in which the first grooves (11) and the second grooves (12) are alternately arranged along a vertical line, wherein the first trays (10) having the same shape are continuously arranged along a horizontal line, and
the second tray (20) has a rectangular plate shape in which the third grooves (23) and the fourth grooves (24) are arranged along the vertical line, wherein the second trays (20) having the same shape are continuously arranged along the horizontal line.

3. The tray according to claim 2, wherein the first tray (10) has a zigzag-shaped cross-section vertically along the vertical line in a region in which the first grooves (11) and the second grooves (12) are alternately arranged, and the second tray (20) has a zigzag-shaped cross-section vertically along the vertical line in a region in which the third grooves (23) and the fourth grooves (24) are alternately arranged.

4. The tray according to claim 2, wherein the first tray (10) and the second tray (20) have the same area.

5. The tray according to claim 4, wherein the first trays (10) and the second trays (20) are alternately and continuously stacked.

6. The tray according to claim 1, wherein, when the battery caps (30) are seated in the erect state, each of the first grooves (11) and the second grooves (12) have a width in which the battery caps (30) are maintainable in the erect state.

7. The tray according to claim 1, wherein, in the first tray (10), the number of first grooves (11) arranged in the vertical line and the number of first grooves (11) arranged in the horizontal line are the same, and
in the second tray (20), the number of third grooves (23) arranged in the vertical line and the number of third grooves (23) arranged in the horizontal line are the same.

8. The tray according to claim 1, wherein, when the first tray (10) is placed above the second tray (20) so that the battery caps (30) are placeable in the vertically erect state in the space defined between the second groove (12) and the third groove (23); and the first tray (10) is placed below the second tray (20) so that the battery caps (30) are placeable in the vertically erect state in the space defined between the first groove (11) and the fourth groove (24), the uppermost ends of the battery caps (30) do not contact the first tray (10) or the second tray (20).

9. The tray according to claim 1, wherein each of the first tray (10) and the second tray (20) is made of a material having hardness less than that of the battery caps (30).

10. The tray according to claim 1, wherein the first tray (10) has one of a protrusion (15) or a groove (14) at a portion having a shape protruding upward by the second groove (12) between the first grooves (11) adjacent to each other, and the other of the protrusion (15) or the groove (14) at a portion having a shape protruding downward by the first groove (11) between the second grooves (12) adjacent to each other, and
the second tray (20) has one of a protrusion (26) or a groove (25), which is engaged with the protrusion (15) or the groove (14) disposed at a lower portion of the first tray (10), at a portion having a shape protruding upward by the fourth groove (24) between the third grooves (23), and the other of the protrusion (26) or the groove (25) at a portion having a shape protruding downward by the third groove (23) between the fourth grooves (24) adjacent to each other.

11. The tray according to claim 1, wherein a magnet (50) is attached to a portion at which the first tray (10) and the second tray (20) contact each other.

## Patentansprüche

1. Ablage für ein Bestücken von Batterieabdeckungen (30), auf welcher die Batterieabdeckungen (30) montierbar sind, wobei die Ablage umfasst:
erste Ablagen (10), welche jeweils eine obere Fläche, in welcher erste Nuten (11) definiert sind, und eine untere Fläche aufweisen, in welcher zweite Nuten (12) definiert sind; und
zweite Ablagen (20), welche jeweils eine obere Fläche, in welcher dritte Nuten (23) definiert sind, und eine untere Fläche aufweisen, in welcher vierte Nuten (24) definiert sind, und oberhalb oder unterhalb der ersten Ablage (10) eingerichtet sind, wobei, wenn die erste Ablage (10) oberhalb der zweiten Ablage (20) eingerichtet ist, jede der zweiten Nuten (12) und jede der dritten Nuten (23) miteinander kommunizieren, um einen Kommunikationsraum bereitzustellen, und wenn die erste Ablage (10) unterhalb der zweiten Ablage (20) eingerichtet ist, jede der ersten Nuten (11) und jede der vierten Nuten (24) miteinander kommunizieren, um einen Kommunikationsraum bereitzustellen,
**dadurch gekennzeichnet, dass** die Batterieabdeckungen (30) in einem vertikal aufrechten Zustand in der ersten Ablage (10) und der zweiten Ablage (20) montierbar sind;
wobei die ersten Nuten (11) und die zweiten Nuten (12) alternierend angeordnet sind, sodass die zweiten Nuten (12) zwischen den ersten Nuten (11) benachbart zueinander in der ersten Ablage (10) eingerichtet sind, und
die dritten Nuten (23) und die vierten Nuten (24) alternierend angeordnet sind, sodass die vierten Nuten (24) zwischen den dritten Nuten (23) benachbart zueinander in der zweiten Ablage (20) eingerichtet sind, und
wobei, wenn die erste Ablage (10) und die zweite Ablage (20) gestapelt sind und die Batterieabdeckungen (30) in dem Raum zwischen der zweiten Nut (12) und der dritten Nut (23) oder dem Raum zwischen der ersten Nut (11) und der vierten Nut (24) montiert sind, obere Enden der Batterieabdeckungen (30) in den zweiten Nuten (12) oder den vierten Nuten (24) beschränkbar sind und untere Enden der Batterieabdeckungen (30) in den ersten Nuten (11) oder den dritten Nuten (23) beschränkbar sind, um die erste Ablage (10) und die zweite Ablage (20) daran zu hindern, getrennt zu sein.

2. Ablage nach Anspruch 1, wobei die erste Ablage (10) eine rechteckige Plattenform aufweist, in welcher die ersten Nuten (11) und die zweiten Nuten (12) alternierend entlang einer vertikalen Linie angeordnet sind, wobei die ersten Ablagen (10), welche die gleiche Form aufweisen, entlang einer horizontalen Linie kontinuierlich angeordnet sind, und
die zweite Ablage (20) eine rechteckige Plattenform aufweist, in welcher die dritten Nuten (23) und die vierten Nuten (24) entlang der vertikalen Linie angeordnet sind, wobei die zweiten Ablagen (20), welche die gleiche Form aufweisen, entlang der horizontalen Linie kontinuierlich angeordnet sind.

3. Ablage nach Anspruch 2, wobei die erste Ablage (10) einen zick-zack-förmigen Querschnitt vertikal entlang der vertikalen Linie in einem Bereich aufweist, in welchem die ersten Nuten (11) und die zweiten Nuten (12) alternierend angeordnet sind, und die zweite Ablage (20) einen zick-zack-förmigen Querschnitt vertikal entlang der vertikalen Linie in einem Bereich aufweist, in welchem die dritten Nuten (23) und die vierten Nuten (24) alternierend angeordnet sind.

4. Ablage nach Anspruch 2, wobei die erste Ablage (10) und die zweite Ablage (20) die gleiche Fläche aufweisen.

5. Ablage nach Anspruch 2, wobei die ersten Ablagen (10) und die zweiten Ablagen (20) alternierend und kontinuierlich gestapelt sind.

6. Ablage nach Anspruch 1, wobei, wenn die Batterieabdeckungen (30) in dem aufrechten Zustand gesetzt sind, jede der ersten Nuten (11) und der zweiten Nuten (12) eine Breite aufweisen, in welcher die Batterieabdeckungen (30) in dem aufrechten Zustand haltbar sind.

7. Ablage nach Anspruch 1, wobei, in der ersten Ablage (10), die Anzahl von ersten Nuten (11), welche in der vertikalen Linie angeordnet sind, und die Anzahl von ersten Nuten (11), welche in der horizontalen Linie angeordnet sind, die gleiche sind, und
in der zweiten Ablage (20), die Anzahl von dritten Nuten (23), welche in der vertikalen Linie angeordnet sind, und die Anzahl von dritten Nuten (23), welche in der horizontalen Linie angeordnet sind, die gleiche sind.

8. Ablage nach Anspruch 1, wobei, wenn die erste Ablage (10) oberhalb der zweiten Ablage (20) platziert ist, sodass die Batterieabdeckungen (30) in dem vertikal aufrechten Zustand in dem Raum platzierbar sind, welcher zwischen der zweiten Nut (12) und der dritten Nut (23) definiert ist; und die erste Ablage (10) unterhalb der zweiten Ablage (20) platziert ist, sodass die Batterieabdeckungen (30) in dem vertikal aufrechten Zustand in dem Raum platzierbar sind, welcher zwischen der ersten Nut (11) und der vierten Nut (24) definiert ist, die obersten Enden der Batterieabdeckungen (30) die erste Ablage (10) oder die zweite Ablage (20) nicht kontaktieren.

9. Ablage nach Anspruch 1, wobei jede aus der ersten Ablage (10) und der zweiten Ablage (20) aus einem Material hergestellt ist, welches eine Härte aufweist, welche geringer als die der Batterieabdeckungen (30) ist.

10. Ablage nach Anspruch 1, wobei die erste Ablage (10) eines aus einem Vorsprung (15) oder einer Nut (14) an einem Abschnitt aufweist, welcher eine Form aufweist, welche nach oben neben der zweiten Nut (12) zwischen den ersten Nuten (11) vorsteht, welche zueinander benachbart sind, und das andere aus dem Vorsprung (15) oder der Nut (14) an einem Abschnitt eine Form aufweist, welche nach unten neben der ersten Nut (11) zwischen den zweiten Nuten (12) vorsteht, welche zueinander benachbart sind, und
die zweite Ablage (20) eines aus einem Vorsprung (26) oder einer Nut (25) aufweist, welches mit dem Vorsprung (15) oder der Nut (14) eingreift, welches an einem unteren Abschnitt der ersten Ablage (10) eingerichtet ist, an einem Abschnitt, welcher eine Form aufweist, welche nach oben neben der vierten Nut (24) zwischen den dritten Nuten (23) vorsteht, und das andere aus dem Vorsprung (26) oder der Nut (25) an einem Abschnitt eine Form aufweist, welche nach unten neben der dritten Nut (23) zwischen den vierten Nuten (24) vorsteht, welche zueinander benachbart sind.

11. Ablage nach Anspruch 1, wobei ein Magnet (50) an einem Abschnitt befestigt ist, an welchem die erste Ablage (10) und die zweite Ablage (20) einander kontaktieren.

## Revendications

1. Plateau pour charger des bouchons de batterie (30), sur lequel les bouchons de batterie (30) peuvent être montés, le plateau comprenant :
des premiers plateaux (10), ayant chacun une surface du dessus, dans laquelle des premières rainures (11) sont définies, et une surface du dessous, dans laquelle des deuxièmes rainures (12) sont définies ; et
des seconds plateaux (20), ayant chacun une surface du dessus, dans laquelle des troisièmes rainures (23) sont définies, et une surface du dessous, dans laquelle des quatrièmes rainures (24) sont définies et disposées au-dessus ou en dessous du premier plateau (10), dans lequel, lorsque le premier plateau (10) est disposé au-dessus du second plateau (20), chacune des deuxièmes rainures (12) et chacune des troisièmes rainures (23) communiquent l'une avec l'autre pour fournir un espace de communication, et lorsque le premier plateau (10) est disposé en dessous du second plateau (20), chacune des premières rainures (11) et chacune des quatrièmes rainures (24) communiquent l'une avec l'autre pour fournir un espace de communication,
**caractérisé en ce que** les bouchons de batterie (30) peuvent être montés dans un état dressé verticalement dans le premier plateau (10) et le second plateau (20),
dans lequel les premières rainures (11) et les deuxièmes rainures (12) sont agencées alternativement de façon à ce que les deuxièmes rainures (12) soient disposées entre les premières rainures (11) adjacentes les unes aux autres dans le premier plateau (10), et
les troisièmes rainures (23) et les quatrièmes rainures (24) sont agencées alternativement de façon à ce que les quatrièmes rainures (24) soient disposées entre les troisièmes rainures (23) adjacentes les unes aux autres dans le second plateau (20), et
dans lequel, lorsque le premier plateau (10) et le second plateau (20) sont empilés, et que les bouchons de batterie (30) sont montés dans l'espace entre la deuxième rainure (12) et la troisième rainure (23) ou l'espace entre la première rainure (11) et la quatrième rainure (24), des extrémités supérieures des bouchons de batterie (30) peuvent être bloquées dans les deuxièmes rainures (12) ou les quatrièmes rainures (24), et des extrémités inférieures des bouchons de batterie (30) peuvent être bloquées dans les premières rainures (11) ou les troisièmes rainures (23) pour empêcher le premier plateau (10) et le second plateau (20) d'être séparés.

2. Plateau selon la revendication 1, dans lequel le premier plateau (10) a une forme de plaque rectangulaire dans laquelle les premières rainures (11) et les deuxièmes rainures (12) sont agencées alternativement le long d'une ligne verticale, dans lequel les premiers plateaux (10) ayant la même forme sont agencés de façon continue le long d'une ligne horizontale, et
le second plateau (20) a une forme de plaque rectangulaire dans laquelle les troisièmes rainures (23) et les quatrièmes rainures (24) sont agencées le long de la ligne verticale, dans lequel les seconds plateaux (20) ayant la même forme sont agencés de façon continue le long de la ligne horizontale.

3. Plateau selon la revendication 2, dans lequel le premier plateau (10) a une section transversale en forme de zigzag verticalement le long de la ligne verticale dans une région dans laquelle les premières rainures (11) et les deuxièmes rainures (12) sont agencées alternativement, et le second plateau (20) a une section transversale en forme de zigzag verticalement le long de la ligne verticale dans une région dans laquelle les troisièmes rainures (23) et les quatrièmes rainures (24) sont agencées alternativement.

4. Plateau selon la revendication 2, dans lequel le premier plateau (10) et le second plateau (20) ont la même superficie.

5. Plateau selon la revendication 4, dans lequel les premiers plateaux (10) et les seconds plateaux (20) sont empilés alternativement et de façon continue.

6. Plateau selon la revendication 1, dans lequel, lorsque les bouchons de batterie (30) sont positionnés dans l'état dressé, chacune des premières rainures (11) et des deuxièmes rainures (12) a une largeur dans laquelle les bouchons de batterie (30) peuvent être maintenus dans l'état dressé.

7. Plateau selon la revendication 1, dans lequel, dans le premier plateau (10), le nombre de premières rainures (11) agencées dans la ligne verticale et le nombre de premières rainures (11) agencées dans la ligne horizontale sont les mêmes, et
dans le second plateau (20), le nombre de troisièmes rainures (23) agencées dans la ligne verticale et le nombre de troisièmes rainures (23) agencées dans la ligne horizontale sont les mêmes.

8. Plateau selon la revendication 1, dans lequel, lorsque le premier plateau (10) est placé au-dessus du second plateau (20) de façon à ce que les bouchons de batterie (30) puissent être placés dans l'état dressé verticalement dans l'espace défini entre la deuxième rainure (12) et la troisième rainure (23) ; et que le premier plateau (10) est placé en dessous du second plateau (20) de façon à ce que les bouchons de batterie (30) puissent être placés dans l'état dressé verticalement dans l'espace défini entre la première rainure (11) et la quatrième rainure (24), les extrémités les plus hautes des bouchons de batterie (30) ne sont pas en contact avec le premier plateau (10) ou le second plateau (20).

9. Plateau selon la revendication 1, dans lequel chacun du premier plateau (10) et du second plateau (20) est fait d'un matériau ayant une dureté plus faible que celle des bouchons de batterie (30).

10. Plateau selon la revendication 1, dans lequel le premier plateau (10) a une parmi une saillie (15) ou une rainure (14) au niveau d'une partie ayant une forme faisant saillie vers le haut par la deuxième rainure (12) entre les premières rainures (11) adjacentes les unes aux autres, et l'autre parmi la saillie (15) ou la rainure (14) au niveau d'une partie ayant une forme faisant saillie vers le bas par la première rainure (11) entre les deuxièmes rainures (12) adjacentes les unes aux autres, et
le second plateau (20) a une parmi une saillie (26) ou une rainure (25), qui est en prise avec la saillie (15) ou la rainure (14) disposées au niveau d'une partie inférieure du premier plateau (10), au niveau d'une partie ayant une forme faisant saillie vers le haut par la quatrième rainure (24) entre les troisièmes rainures (23), et l'autre parmi la saillie (26) ou la rainure (25) au niveau d'une partie ayant une forme faisant saillie vers le bas par la troisième rainure (23) entre les quatrièmes rainures (24) adjacentes les unes aux autres.

11. Plateau selon la revendication 1, dans lequel un aimant (50) est fixé à une partie au niveau de laquelle le premier plateau (10) et le second plateau (20) sont en contact l'un avec l'autre.
